# EUROPEAN PATENT SPECIFICATION

(11) **EP 3 856 867 B1**
(45) Date of publication and mention of the grant of the patent: **15.06.2022**
(21) Application number: 19779384.7
(22) Date of filing: 16.09.2019
(51) Int. Cl.: C09K 8/528

(54) **TREATMENT OF IRON SULPHIDE DEPOSITS**
BEHANDLUNG VON EISENSULFIDABLAGERUNGEN
TRAITEMENT DE DÉPÔTS DE SULFURE DE FER

(30) Priority: 28.09.2018 US 201862738629 P
(43) Date of publication of application: 04.08.2021
(73) Proprietor: Rhodia Operations, 93300 Aubervilliers (FR)
(72) Inventor: LABARRE, Dominique, 92200 NEUILLY SUR SEINE (FR); JONES, Christopher, CHESLYN HAY STAFFORDSHIRE WS6 7BS (GB)
(74) Representative: Osha Liang
(86) International application number: PCT/EP2019/074695
(87) International publication number: WO 2020/064399

(56) References cited:
- WO-A1-02/08127
- WO-A1-2004/083131
- WO-A1-2005/026065
- WO-A2-2005/074688
- US-A1- 2010 099 596

## Description

The present invention relates to a method of preventing or alleviating the problems which are commonly associated with deposits of iron sulphide, and to novel formulations for use therein.

Sour oil and gas production is typically associated with the deposits of iron sulfides and schmoo, which can cause severe processing issues and early equipment failure due to the formation of stabilized emulsions and severe, under-deposit corrosion.

More precisely, the deposits are mainly the result of a reaction between hydrogen sulphide, formed by sulphate-reducing bacteria, and ferrous metal oil field equipment and/or iron compound in the formation. They obstruct the flow of oil through wells and in the adjacent strata and also in pipelines and in processing and refinery plant. Ferrous sulphide particles also tend to stabilise oil water emulsions which often form, especially during secondary oil recovery, and present major problems to oil producers.

Furthermore, the iron sulfide can exist as a predominantly inorganic solid, or it can attract and bind together organic substrates, such as asphaltenes, waxes or crude oil to produce characteristic black, "sticky" solids referred to as "schmoo" . Schmoo will typically contain at least 3% iron sulfides and, more typically between 5-20% of iron sulfides, as the binding agent for both the organic substrates and other inorganic solids such as sand, scale particles or corrosion debris.

A way to dissolve a deposit of ferrous sulphide is by contact with strong acid. Unfortunately this method generates large volumes of highly toxic hydrogen sulphide gas. An alternative method of treating the deposits with powerful oxidising agents avoids the toxicity hazards but produces oxidation products, including elemental sulphur, which are corrosive to pipework that it has not generally been practised.

It has been proposed in the past to use formulations based on tris (hydroxymethyl) phosphine (THP) and/or tetrakis(hydroxyorgano)phosphonium salts (THP+ salts), for example, with organic nitrogen compounds such as urea and thiourea or with amino carboxylic acids of amino phosphonic acids.

Document WO2005/074688 disclosesa method of treating a water system containing or in contact with a metal sulphide scale, which method comprises adding to said system separately or together, a THP salt and a biopenetrant, in which the biopenetrant comprises a polymer of an unsaturated carboxylic acid or a copolymer of an unsaturated carboxylic acid with a sulphonic acid, thereby dissolving at least part of said scale.

There is constant need for new formulations which are more effective and environment friendly.

The invention provides the use of a synergistic mixture of THP or a THP+ salt and a citrate salt to inhibit, prevent, reduce, dissolve or disperse deposits of a metal sulphide in aqueous systems.

According to one aspect, the present invention provides a method of treating a water system containing or in contact with a metal sulphide scale, which method comprises:
- adding to said system separately or together, a synergistic mixture of (i) a phosphorus compound selected from THP and THP+ salts and (ii) a citrate salt, to provide a solution; then
- contacting said solution with said scale, thereby dissolving at least part of said scale in said solution;
- and withdrawing said dissolved metal sulphide from the system.

The term "THP" is referred to a tris (hydroxyalkyl) phosphine, the alkyl being preferably a methyl. When THP is added in the form of a THP+ salt (*i.e.* tetrakis (hydroxyalkyl) phosphonium salt, the alkyl being preferably a methyl), the latter may comprise any counter ion which is compatible with the system.

The expression "THP" as used herein is referred generally to THP itself and also to THP+ salts.

It is preferred that the synergistic mixture is in contact with the metal sulphilde scale at a pH between 4 and 7, most preferably 4.5 to 7, e.g. 5 to 6.

Preferably, the THP+ salt is THP chloride, THP phosphate or THP sulphate. Other THP salts include the phosphite, bromide, fluoride, chloride, phosphate, carbonate, acetate, formate, borate, and silicate.

According to a specific embodiment, the THP+ salt is not a THP citrate.

The metal sulphide may be, for example, iron sulphide. The iron sulphide may be Troilite (FeS) or pyrite (FeS2), or greigite (Fe3S4). Alternatively, the iron sulphide may be mackinawite (Fe9 S8) or phyrrhotite (Fe7S8).

According to the present invention, the citrate salt is a salt of citric acid with a cation, preferably selected from sodium and potassium. It is preferred that the cation is not ammonium.

Generally, the counter ion is not a THP⁺.

The preferred molar ratio of THP or THP+ salt to citrate salt is from 1:10 to 1:1, e. g. 1:8 to 1:1, especially 1:8 to 1:1.5, e. g. 1:8 to 1:2, e.g. 1:5 to 1:2.

According to anther preferred embodiment, the molar ratio of THP or THP+ salt to citrate salt is from 10:1 to 1:1, e. g. 8:1 to 1:1, especially 8:1 to 1.5:1, e. g. 8:1 to 2:1, e.g. 5:1 to 2:1.

It has been unexpectedly found that a citrate salt acts synergistically with a THP or THP+ salt to considerably enhance the efficacy of the THP or THP+ salt in the dissolution of metal sulphide, especially iron sulphide scale.

According to a specific embodiment of the invention, the mixture of the invention does not contain an amino-carboxylate or amino-phosphonate acid, such as ethylenediamine tetrakis (methylene phosphonates) and diethylene triamine pentakis (methylene phosphonates), amino tris (methylene phosphonate), ethanolamine bis (methylene phosphonates) and triethylene tetramine hexakis (methylene phosphonates) as well as mixtures of two or more of the above amino phosphonates, an amino carboxylic acid such as nitrilo triacetic acid or, preferably, ethylene diamine tetraaetic acid (EDTA).

The mixture of the invention may further comprise a polymer/copolymer of an unsaturated carboxylic acid or a copolymer of an unsaturated carboxylic acid with a sulphonic acid, said polymer or copolymer being either terminated by vinylphosphonic acid (VPA) or vinylidene-1, 1-diphosphonic acid (VDPA) or having such monomers incorporated into the polymer backbone; accordingly the polymer may be a random copolymer incorporating VPA and/or VDPA monomers.

The polymer or copolymer may suitably be a polyacrylate or an acrylate/sulphonate copolymer.

In accordance with preferred embodiments of the present invention, the polymer/copolymer may be a polyacrylate terminated with vinylphosphonic acid, (hereinafter "VPA end-capped polymer") or with vinylidene-1, 1- diphosphonic acid (hereinafter "VDPA end-capped polymer"), or may be a polyacrylate incorporating VPA and/or VDPA monomers.

In other preferred embodiments, the polymer/copolymer may be an acrylate/sulphonate copolymer terminated with vinylidene-1, 1- diphosphonic acid (hereinafter"VDPA end-capped copolymer") or with vinylphosphonic acid (hereinafter"VPA end-capped co-polymer"), or may be an acrylate/sulphonate copolymer incorporating VPA and/or VDPA monomers.

In the composition of the present invention, the preferred ratio of VPA or VDPA end-capped polymer or copolymer to THP salt, is, when expressed as a percentage by weight, in the range of from 0.5 to 50%, such as from 0.5 to 30%; preferably from 1 to 25%, such as from 1 to 20%, for example from 1 to 10% or from 2 to 8% ; most preferably from 1 to 5%, for example from 3 to 5% (based upon active solids and upon a 1 to 74%, for example a 50%, active THP salt formulation).

In one embodiment, the polymer/copolymer is a VPA end-capped polymer or VDPA end-capped copolymer.

The preferred ratio of VPA end-capped polymer or VDPA end-capped copolymer to THP salt is, when expressed as a percentage by weight, in the range of from 0.5 to 50%, such as from 0.5 to 30%; preferably from 1 to 25%, such as from 1 to 20%, for example from 1 to 10% or from 2 to 8% ; most preferably from 1 to 5%, for example from 3 to 5% (based upon active solids and upon a 1 to 74%, for example a 50%, active THP salt formulation).

It has been unexpectedly found that a citrate salt acts synergistically with a composition comprising a THP or THP salt and a polymer/copolymer as defined here-above to considerably enhance the efficacy of dissolution of metal sulphide, especially iron sulphide scale.

Mixture of THP with carboxylate salts were reported in the past. The citrate reveals to be a very specific carboxylate that lead to a synergistic effect that would not be observed with other carboxylate, e.g. acetate.

According to another aspect, the invention proposes a synergistic composition, comprising
(i) a THP or THP+ salt as defined here-above and;
(ii) a citrate salt as defined here-above; and optionally
(iii) a polymer/copolymer of an unsaturated carboxylic acid or a copolymer of an unsaturated carboxylic acid with a sulphonic acid, said polymer or copolymer being either terminated by vinylphosphonic acid (VPA) or vinylidene-1, 1-diphosphonic acid (VDPA) or having such monomers incorporated into the polymer backbone;
wherein the pH of the composition is of 4-7, preferably of 5-6.

According to a specific embodiment, the molar ratio between component (i) and (ii) is 1:10 to 1:1 by weight e. g. 1:8 to 1:1, especially 1:8 to 1:1.5, e. g. 1:8 to 1:2, e.g. 1:5 to 1:2.

According to a specific embodiment, the molar ratio between component (i) and (ii) is from 10:1 to 1:1 by weight, e. g. 8:1 to 1:1, especially 8:1 to 1.5:1, e. g. 8:1 to 2:1, e.g. 5:1 to 2:1.

The composition of the present description is particularly effective at temperatures above 40°C, especially above 50°C, particularly 60° to 150°C, e. g. 80 to 130°C, which are ambient temperatures at the down-hole loci where solubilisation of iron sulphide is more of a problem.

The preferred dose rate depends on the nature and severity of the problem. THP and citrate may be continuously or intermittently dosed, together or separately, to a potentially deposit forming system in order to inhibit or prevent deposition. It may be shock dosed to an already fouled system or it may be pumped at relatively high concentration into a badly fouled system and left to soak until the deposit has been substantially reduced or removed.

Generally the complete solubilisation of an established deposit requires stoichiometric proportion of THP mixtures. However lesser amounts may suffice to loosen the deposit and allow it to be flushed out of the system.

Low concentrations down to threshold levels will often be enough to inhibit or prevent deposition.

In particular two different specific systems which have been found effective have been a continuously dosed inhibitory system and a shock dosed remedial system. The former may typically contain from 1 to 50 ppm of the mixture, preferably 4 to 20 ppm, e. g. 5 to 10 ppm, while the latter usually contain from 0.1 to 50%, preferably 1 to 30% e. g. 5 to 25% by weight.

Formulations supplied to the user for dosing will usually be aqueous solutions containing at least 5% by weight e. g. from 10% to saturation more usually 15 to 55% by weight.

It is also possible to use solid mixtures of the mixture of the invention. Especially preferred for some applications are mixtures, preferably with buffer, absorbed in or mixed with an inert solid substrate or diluent such as silica, talc, zeolite, bentonite, sodium sulphate, a solid carboxylic acid such as adipic acid or porous ceramic beads.

Formulations for use according to our invention may contain other water treatment products such as surfactants.

Surfactants for use in our invention typically contain hydrophobic groups such as alkenyl, cycloalkenyl, alkyl, cycloalkyl, aryl, alkyl/aryl or more complex aryl (as in petroleum sulphonates) moieties having from 8 to 22, preferably 10 to 20, typically 12 to 18 carbon atoms and a hydrophilic moiety. Other hydrophobic groups included in the invention are polysiloxane groups and polyoxypropylene groups.

The surfactant may for example consist substantially of an at least sparingly watersoluble salt of sulphonic or mono esterified sulphuric acids, e. g. an alkylbenzene sulphonate, alkyl sulphate, alkyl ether sulphate, olefin sulphonate, alkane sulphonate, alkylphenol sulphate, alkylphenol ether sulphate, alkylethanolamide sulphate, alkylethanolamidether sulphate, or alpha sulpho fatty acid or its ester each having at least one alkyl or alkenyl group with from 8 to 22, more usually 10 to 20, aliphatic carbons atoms.

The expression "ether" hereinbefore refers to compounds containing one or more glyceryl groups and/or an oxyalkylene or polyoxyalkylene group especially a group containing from 1 to 20 oxyethylene and/or oxypropylene groups. One or more oxybutylene groups may additionally or alternatively be present. For example, the sulphonated or sulphated surfactant may be sodium dodecyl benzene sulphonate, potassium hexadecyl benzene sulphonate, sodium dodecyl dimethyl benzene sulphonate, sodium lauryl sulphate, sodium tallow sulphate, potassium oleyl sulphate, ammonium lauryl sulphate, sodium tallow sulphate, potassium oleyl sulphate, ammonium lauryl monoethoxy sulphate, or monethanolamine cetyl 10 mole ethoxylate sulphate.

Other anionic surfactants useful according to the present invention include alkyl sulphosuccinates, such as sodium di-2-ethylhexylsulphosuccinate and sodium dihexylsulphosuccinate, alkyl ether sulphosuccinates, alkyl sulphosuccinamates, alkyl ether sulphosuccinamates, acyl sarcosinates, acyl taurides, isethionates, soaps such as stearates, palmitates, resinates, oleates, linoleates and alkyl ether carboxylates.

Anionic phosphate esters and alkyl phosphonates, alkyl amino and imino methylene phosphonates may be used. In each case the anionic surfactant typically contains at least one aliphatic hydrocarbon chain having from 8 to 22, preferably 10 to 20 carbon atoms, and, in the case of ethers, one or more glyceryl and/or from 1 to 20 oxyethylene and/'or oxypropylene and/or oxybutylene groups.

Preferred anionic surfactants are sodium salts. Other salts of commercial interest include those of potassium, lithium, calcium, magnesium, ammonium, monoethanolamine, diethanolamine, triethanolamine, alkyl amines containing up to seven aliphatic carbon atoms, and alkyl and/or hydroxyalkyl phosphonium.

The surfactant may optionally contain or consist of non-ionic surfactants. The non-ionic surfactant may be e. g. C10-22 alkanolamides of a mono or dilower alkanolamine, such a coconut monethanolamide. Other non-ionic surfactants which may optionally be present, include tertiary acetylenic glycols, polyethoxylated alcohols, polyethoxylated mercaptans, polyethoxylated carboxylic acids, polyethoxylated amnes, polyethoxylated alkylolamides, polyethoxylated alkylphenols, polyethoxylated glyceryl esters, polyethoxylated sorbitan esters, polyethoxylated phosphate esters, and the propoxylate or ethoxylated and propoxylated analogues of all the aforesaid ethoxylated non-ionics, all having a C8-22 alkyl or alkeny group and up to 20 ethyleneoxy and/or propyleneoxy groups. Also included are polyoxypropylene/polyethylene oxide block copolymers, polyoxybutylene/polyoxyethylene copolymers and polyoxybuylene/polyoxypropylene copolymers. The polyethoxy, polyoxypropylene and polyoxybutylene compounds may be end capped with, e. g. benzyl groups to reduce the foaming tendency.

Compositions of our invention may contain an amphoteric surfactant. The amphoteric surfactant may for example be a betaine, e. g. a betaine of the formula R₃N⁺CH₂COO⁻, wherein each R is an alkyl, cycloalkyl, alkenyl or alkaryl group and preferably at least one, and more preferably not more than one R, has an average of from 8 to 20, e. g. 10 to 18 aliphatic carbon atoms and each other R has an average of from 1 to 4 carbon atoms. Particularly preferred are the quaternary imidazoline betaines often ascribed the formula: 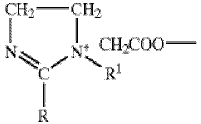 where R and R' are alkyl, alkenyl, cycloalkyl, alkaryl or alkanol groups having an average of from 1 to 20 aliphatic carbon atoms and R preferably has an average of from 8 to 20, e. g. 10 to 18 aliphatic carbon atoms and R' preferably has 1 to 4 carbon atoms. In practice it has been shown that these compounds exist predominantly in the equivalent open chain form. Other amphoteric surfactants for use according to our invention include alkyl amine ether sulphates, sulphobetaines and other quaternary amine or quaternised imidazoline sulphonic acids and their salts, and Zwitterionic surfactants, e. g. N-alkyl taurines, carboxylates amido amines such as RCONH(CH₂)₂N⁺(CH₂CH₂CH₃)₂CH₂CO⁻₂ and amido acids having, in each case, hydrocarbon groups capable of conferring surfactant properties (e. g. alkyl, cycloalkyl alkenyl or alkaryl groups having from 8 to 20 aliphatic carbon atoms). Typical examples include 2-tallow alkyl, 1-tallow amido alkyl, 1-carboxymethyl imidazoline and 2-coconut alkyl N-carboxymethyl 2 (hydroxyalkyl) imidazoline.

Compositions of the present invention may also include cationic surfactants.

The cationic surfactant may for example be an alkylammonium salt having a total of at least 8, usually 10 to 30, e. g. 12 to 24 aliphatic carbon atoms, especially a tri or tetra-alkylammonium salt. Typically alkylammonium surfactants for use according to our invention have one or at most two relatively long aliphatic chains per molecule (e. g. chains having an average of 8 to 20 carbon atoms each, usually 12 to 18 carbon atoms) and two or three relatively short chain alkyl groups having 1 to 4 carbon atoms each, e. g. methyl or ethyl groups preferably methyl groups. Typical examples include dodecyl trimethyl ammonium salts. Behzalkonium salts having one 8 to 20 C alkyl group two 1 to 4 carbon alkyl groups and a benzyl group are also useful.

Another class of cationic surfactant useful according to our invention comprises N-alkyl pyridinium salts wherein the alkyl group has an average of from 8 to 22, preferably 10 to 20 carbon atoms. Other similarly alkylated hetercyclic salts, such as N-alkyl isoquinolinium salts, may also be used.

Alkaryl dialkylammonium salts, having an average of from 10 to 30 aliphatic carbon atoms are useful, e. g. those in which the alkylaryl group is an alkyl benzene group having an average of from 8 to 22, preferably 10 to 20 carbon atoms and the other two alkyl groups usually have from 1 to 4 carbon atoms, e. g. methyl groups.

Other classes of cationic surfactant which are of use in our invention include so called alkyl imidazoline or quaternised imidazoline salts having at least one alkyl group in the molecule with an average of from 8 to 22 preferably 10 to 20 carbon atoms. Typical examples include alkyl methyl hydroxyethyl imidazolinium salts, alkyl benzyl hydroxyethyl imidazolinium salts, and 2 alkyl-l-alkylamidoethyl imidazoline salts.

Another class of cationic surfactant for use according to our invention comprises the amido amines such as those formed by reacting a fatty acid having 2 to 22 carbon atoms or an ester, glyceride or similar amide forming derivative thereof, with a di or poly amine, such as, for example, ethylene diamine or diethylene triamine, in such a proportion as to leave at least one free amine group. Quaternised amido amines may similarly be employed.

Alkyl phosphonium and hydroxyalkyl phosphonium salts having one C8-20 alkyl group and three C1-4 alkyl or hydroxyalkyl groups may also be used as cationic surfactants in our invention.

Typically the cationic surfactant may be any water soluble compound having a positively ionised group, usually comprising a nitrogent atom, and either one or two alkyl groups each having an average of from 8 to 22 carbon atoms.

The anionic portion of the cationic surfactant may be any anion which confers water solubility, such as formate, acetate, lactate, tartrate, citrate, chloride, nitrate, sulphate or an alkylsulphate ion having up to 4 carbon atoms such as methosulphate. It is preferably not a surface active anion such as a higher alkyl sulphate or organic sulphonate.

Polyfluorinated anionic, nonionic or cationic surfactant may also be useful in the compositions of our invention. Examples of such surfactants are polyfluorinated alkyl sulphates and polyfluorinated quaternary ammonium compounds.

Compositions our invention may contain a semi-polar surfactant such as an amine oxide e. g. an amine oxide containing one or two (preferably one) C8-22 alkyl group, the remaining substituent or substitents being preferably lower alkyl groups, e. g. C1-4 alkyl groups or benzyl groups.

Particularly preferred for use according to our invention are surfactants which are effective as wetting agents, typically such surfactants are effective at lowering the surface tension between water and a hydrophobic solid surface. We prefer surfactants which do not stabilise foams to a substantial extent.

Mixtures of two or more of the foregoing surfactants may be used. In particular mixtures of non-ionic surfactants with cationic and/or amphoteric and/or semi polar surfactants or with anionic surfactants may be used.

Typically we avoid mixtures of anionic and cationic surfactants, which are often less mutually compatible.

The surfactants in the compositions of our invention may be used as a biopenetrant.

Preferably the THP and the surfactant are present in a relative weight concentration of from 1:1000 to 1000:1, more usually 1:50 to 200:1, typically 1:20 to 100:1, most preferably 1:10 to 50:1, e. g. 1:1 to 20:1 especially 2:1 to 15:1.

The composition may additionally contain biocides, for example, formaldehyde or glutaraldehyde, water dispersants, demulsifiers, antifoams, solvents, scale inhibitors, corrosion inhibitors, oxygen scavengers and/or flocculants.

Scale or corrosion inhibitors which may be added to the water to be treated in conjunction with the present invention include phosphonates, such as 1-hydroxyethane-1, 1-diphosphonates, polymaleates, polyacrylates, polymethacrylates, polyphosphates, phosphate esters, soluble zinc salts, nitrates, sulphite, benzoate, tannin, ligninsulphonates, benzotriazoles and mercaptobenzothiazoles amines, imidazolines, quaternary ammonium compounds resins and phosphate esters all added in conventional amounts.

The scale and/or corrosion inhibitors may be added to the water separately from or in association with the phosphonium compound and surfactant.

There may be added to the water to be treated oxygen scavengers, flocculants such as polyacrylamide dispersants, antifoams such as acetylenic diols, silicones or polyethoxylated antifoams or other biocides such as tin compounds or isothiazolones.

Compositions of the invention may also comprise non-surfactant biopenetrants including any of those described in WO99/33345.

The non-surfactant biopenetrant may for example be a quaternary ammonium polymer or copolymer. The quaternary ammonium polymer may for example be any of those described in US 4,778,813. Particularly preferred is poly [oxyethylene (dimethyliminio) ethylene (dimethyliminio) ethylene dichloride]. This is a copolymer of NNN1N1-tetramethyl-1,2-diamino ethane with bis (2-chloroethyl) ether, which is commonly referred to as "WSCP". The latter is the commercial name of a product which is sold by Buckman Laboratories. However any other water soluble polymer containing a plurality of quaternary ammonium groups may be used.

Such compounds typically comprise a polymeric cation of the formula: 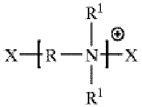 wherein: each R is a divalent organic group constituting with the ammonium group a monomeric residue or separately selected from two or more comonomeric residues; each RI is an alkyl or hydroxy alkyl group, typically having from 1 to 4 carbon atoms and preferably methyl or ethyl; X is hydrogen or a monovalant inorganic or organic end capping group; and n is from 2 to 3000, e. g. 5 to 2000, especially 8 to 1000, e. g. 10 to 500, most preferably 20 to 100. The counter ion may be any convenient THP-compatible anion e. g. chloride, sulphate, phosphate, bromide, fluoride, carbonate, formate, acetate, citrate, lactate, tartrate, methosulphate, borate or silicate.

R may for example be a C1-6 alkylene, oxyalkylene, polyoxyalkylene, haloalkylene, halooxyalkylene, halopolyoxyakylene or 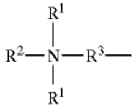 group wherein R² may be a C1-6 alkylene, oxyalkylene polyoxyalkylene, haloalkylene, halooxyalkylene or halopolyoxyalkylene group and R³ represents a covalent bond or an R² group. The polymer may for example be a methylated polyethylene polyamine of the formula

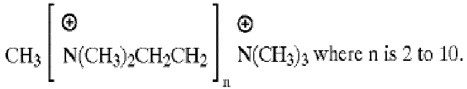

Some other typical examples include:
Poly [hydroxyethylene (dimethyliminio) ethylene (dimethyliminio) methylene dichloride];
Poly [hydroxyethylene (dimethyliminio)-2-hydroxypropylene (dimethyliminio) methylene dichloride];
N-[3-(dimethylammonio) propyl]-N[3-(ethyleneoxyethylenedimethylammonio) propyl] urea dichloride-4-[1-tris(2-hydroxyethyl) ammonium chloride-2-butenyl]poly[1-dimethyl ammonium chloride-2-butenyl]tris(2-hydroxyethyl) ammonium chloride.

The non-surfactant biopenetrant may alternatively be a hydrotrope.

Hydrotropes are sometimes confused with surfactants because they are also amphiphilic. However hydrotropes do not significantly affect surface tension at low concentrations. Hydrotropes act as solubilisers. When present in relatively high concentrations (e. g. greater than about 1%) they increase the water solubility of sparingly or moderately soluble solutes.

A preferred class of hydrotropes includes water soluble glycol ethers. The glycol ether is preferably a water soluble compound of the formula HO [CR₂CR₂O]ₙR' where each R is methyl, ethyl or preferably H, provided that the total number of carbon atoms per [CR₂CR₂O] group does not exceed 4, more preferably is not more than 3 and most preferably is 2, R' is a lower hydrocarbon group such that the compound is water soluble, e. g. butyl, propyl, ethyl or preferably methyl and n is from 1 to 20, preferably 1 to 10, especially 1 to 5, typically 1 to 3, most preferably 2. Preferred examples include diethylene glycol monomethyl ether.

An important class of hydrotropes for use according to our invention comprises the lower alkyl aryl sulphonates. Water soluble salts, e. g. sodium, potassium, ammonium or salts of benzene sulphonic, toluene sulphonic, xylene sulphonic, ethyl benzene sulphonic or cumene sulphonic acids are very effective. Generally, alkylbenzene sulphonic acids having up to four or even five aliphatic carbon atoms show hydrotropicity but not significant surfactancy. Above six aliphatic carbons, e. g. sodium octyl benzene sulphonate, surfactancy predominates over hydrotropicity. Naphthalene sulphonates are also useful as non-surfactant biopenetrants, e.g. alkali metal C1-4 alkyl naphthalene sulphonates. Urea is also an effective hydrotrope.

The biopenetrant synergist is not usually present in a greater weight concentration than the THP, although higher concentrations by weight based on THP e. g. up to 10:1 or even 100:1 are technically possible but commercially undesirable. The proportion is preferably less than 50% by weight based on the weight of THP, more usually less than 20%, typically less than 10%, especially less than 5%. Although very small amounts may be effective we prefer to use proportions of biopenetrant greater than 0.1% based on the weight of THP condensate, usually greater than 0.5%, especially greater than 1%.

According to an aspect, the mixture of the invention can also be used to dissolve schmoo.

In some cases, the mixture further comprises a cleaning package component. Any conventional cleaning package used in the oil and gas wells may be added into the mixture, for example, a cleaning package component may be a mixture of butoxyethanol, Antarox LAEP 16 and Geropon 99.

More generally, the invention may be of use in the oil and gas industry, for treating systems such as oil wells, gas wells, pipeline, storage vessels and production equipment, e.g. during secondary recovery, and in other industrial water system, for instance in paper industry systems.

The invention will be illustrated by the following examples:

### • EXPERIMENTAL PROCEDURE

The following standard test conditions were used in this study:
- Iron sulphide dissolution
   Temperature : 85°C
   Pressure : Atmospheric
   Duration/contact time : 18 hours
   Water chemistry : pH6 aqueous system
   Iron sulfide loading : 3g/30ml of dissolving solution
   Iron sulfide: the FeS samples used in this study were prepared from commercial FeS supplied by VWR - Aldrich. FeS sticks were pulverized, ground and sieved through 0.4 mm to 0.8 mm sieves. The resulting FeS powder was analysed by x-ray diffraction (XRD) and found to consist of 85% by weight, troilite, 11% wüstite and 4% elemental iron.
- Filed Schmoo dissolution
   Experimental conditions:
   Temperature : 40°C
   Pressure : Atmospheric
   Duration/contact time : 16 hours
   Water chemistry : pH6 aqueous system
   Schmoo loading : 0.5g / 15g of dissolving solution
   Schmoo: 85% organics (55% light organics and 30% heavy organics) and 15% inorganics, comprising of 50% mixed calcium/magnesium carbonates, 40% greigeite, Fe₃S₄, and 10% silica dioxide.

All experiments were performed at 85°C, with each test using 3.00 g of FeS powder and 30 ml of dissolver fluid. Capped glass test vials were filled with the dissolver solution, adjusted to pH6, and FeS powder, and were then placed into a preheated oven (85°C). The test vial was shaken vigorously for 15 seconds before being placed in the oven and then agitated every hour for the first 4 hours and finally after 18 hours. The liquid sample was preserved before Inductively Coupled Plasma- Atomic Emission Spectroscopy (ICP-AES) was used to determine the dissolved iron (Fe) concentration (after mineralization with HNO₃). The remaining solid in the test vial was collected by filtration through a 3 micron filter paper and washed with 50 ml of deionised water to remove any residual spent dissolver. The final solid weight was determined after drying at 45°C overnight.

The following experimental variables used:
- Compound A: sodium citrate (referred as "citrate")
- Compound B: ethylene diamine tetraaetic acid
- Polymer A : copolymer acrylate-sulfonate ended phosphonate
- Concentration: THPS active concentrations ranging from 2% w/w to 50% w/w.

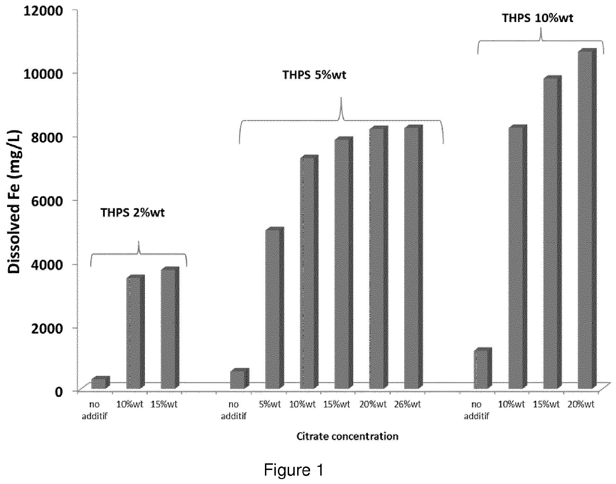

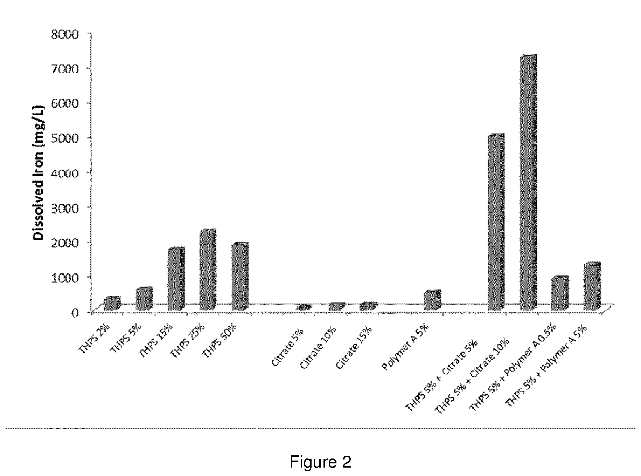

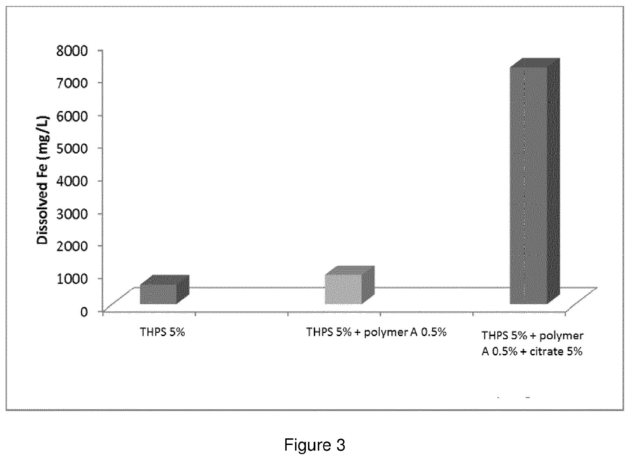

The results are summarized in Figures 1-3.
Figure 1 shows an evolution of dissolved Fe (mg/L) by varying THPS and citrate concentration. An enhanced Fe dissolution is observed when citrate is added.
Figure 2 shows an enhanced Fe dissolution is observed when citrate is mixed with THPS.
Figure 3 shows an enhanced Fe dissolution is observed when citrate is mixed with THPS and the polymer A.

## Claims

1. A method of treating a water system containing or in contact with a metal sulphide scale, the method comprising:
- adding to said system, separately or together, a synergistic mixture of (i) a phosphorus compound selected from tris (hydroxymethyl) phosphine and tetrakis(hydroxyorgano)phosphonium salts and (ii) a citrate salt, to provide a solution; then
- contacting said solution with said scale,
thereby dissolving at least part of said scale in said solution; and
- withdrawing said dissolved metal sulphide from the system.

2. The method as claimed in claim 1, wherein the synergistic mixture is in contact with the metal sulphilde scale at a pH between 4 and 7, most preferably 4.5 to 7, e.g. 5 to 6.

3. The method as claimed in claim 1 or claim 2, wherein the tetrakis(hydroxyorgano)phosphonium salt is tris (hydroxymethyl) phosphinechloride, tris (hydroxymethyl) phosphine phosphate or tris (hydroxymethyl) phosphinesulphate.

4. The method as claimed in any one of the preceding claims, wherein the metal sulphide scale is iron sulphide.

5. The method as claimed in any one of the preceding claims, wherein the citrate salt is a salt of citric acid with a cation preferably selected from sodium and potassium.

6. The method as claimed in any one of claims 1 to 5, wherein the molar ratio of tris (hydroxymethyl) phosphine or tetrakis(hydroxyorgano)phosphoniumsalt to citrate salt is from 1:10 to 1:1 , e.g. 1:8 to 1:1.

7. The method as claimed in claim 6, wherein the molar ratio of tris (hydroxymethyl) phosphine or tetrakis(hydroxyorgano)phosphonium salt to citrate salt is from 1:8 to 1:1.5, e. g. 1:8 to 1 :2, e.g. 1:5 to 1 :2.

8. The method as claimed in any one of claims 1 to 5, wherein the molar ratio of tris (hydroxymethyl) phosphine or tetrakis(hydroxyorgano)phosphonium salt to citrate salt is from 10:1 to 1:1 , e. g. 8:1 to 1:1.

9. The method as claimed in claim 8, wherein the molar ratio of tris (hydroxymethyl) phosphine or tetrakis(hydroxyorgano)phosphonium salt to citrate salt is from 8:1 to 1.5:1 , e. g. 8:1 to 2:1 , e.g. 5:1 to 2:1.

10. The method as claimed in any one of the preceding claims, wherein the synergistic mixture comprises a polymer/copolymer of an unsaturated carboxylic acid or a copolymer of an unsaturated carboxylic acid with a sulphonic acid, said polymer or copolymer being either terminated by vinylphosphonic acid (VPA) or vinylidene-1 , 1-diphosphonic acid (VDPA) or having such monomers incorporated into the polymer backbone.

11. The method as claimed in claim 10, wherein the polymer/copolymer is a polyacrylate terminated with vinylphosphonic acid, (hereinafter "VPA end-capped polymer") or with vinylidene-1 , 1 - diphosphonic acid (hereinafter "VDPA end- capped polymer"), or may be a polyacrylate incorporating VPA and/or VDPA monomers.

12. The method as claimed in claim 10 or claim 11, wherein the polymer/copolymer is an acrylate/sulphonate copolymer terminated with vinylidene-1, 1 - diphosphonic acid (hereinafter "VDPA end-capped copolymer") or with vinylphosphonic acid (hereinafter "VPA end-capped co-polymer"), or may be an acrylate/sulphonate copolymer incorporating VPA and/or VDPA monomers.

13. The method as claimed in any one of the preceding claims, wherein the mixture further contains a surfactant.

14. The method as claimed in any one of the preceding claims, wherein the solution may additionally contain biocides, water dispersants, demulsifiers, antifoams, solvents, scale inhibitors, corrosion inhibitors, oxygen scavengers, flocculants and/or non-surfactant biopenetrants.

15. A synergistic composition, comprising:
(i) a tris (hydroxymethyl) phosphine or tetrakis(hydroxyorgano)phosphonium salt;
(ii) a citrate salt; and
(iii) optionally, a polymer/copolymer of an unsaturated carboxylic acid or a copolymer of an unsaturated carboxylic acid with a sulphonic acid, said polymer or copolymer being either terminated by vinylphosphonic acid (VPA) or vinylidene-1 , 1-diphosphonic acid (VDPA) or having such monomers incorporated into the polymer backbone;
wherein the pH of the composition is of 4-7, preferably of 5-6.

16. The synergistic composition as claimed in claim 15, wherein the molar ratio between component (i) and (ii) is 1:10 to 1:1 , e. g. 1:8 to 1:1.

17. The synergistic composition as claimed in claim 16, wherein the molar ratio between component (i) and (ii) is 1:8 to 1:1.5, e. g. 1:8 to 1:2, e.g. 1:5 to 1:2.

18. The synergistic composition as claimed in claim 15, wherein the molar ratio between component (i) and (ii) is from 10:1 to 1:1, e.g. from 8:1 to 1:1.

19. The synergistic composition as claimed in claim 18, wherein the molar ratio between component (i) and (ii) is from 8:1 to 1.5:1, e. g. 8:1 to 2:1 , e.g. 5:1 to 2:1.

## Patentansprüche

1. Verfahren zum Behandeln eines Wassersystems, das Metallsulfidablagerung enthält oder in Kontakt damit ist, wobei das Verfahren umfasst:
- Zugeben einer synergistischen Mischung von (i) einer Phosphorverbindung ausgewählt aus Tris(hydroxymethyl)phosphin und Tetrakis(hydroxyorgano)phosphoniumsalzen und (ii) einem Citratsalz separat oder zusammen, um eine Lösung bereitzustellen; dann
- Kontaktieren der Lösung mit der Ablagerung, wodurch mindestens ein Teil der Ablagerung in der Lösung gelöst wird; und
- Abziehen des gelösten Metallsulfids aus dem System.

2. Mischung nach Anspruch 1, wobei die synergistische Mischung bei einem pH-Wert zwischen 4 und 7, am meisten bevorzugt 4,5 bis 7, z. B. 5 bis 6, in Kontakt mit der Metallsulfidablagerung ist.

3. Verfahren nach Anspruch 1 oder Anspruch 2, wobei das Tetrakis(hydroxyorgano)phosphoniumsalz Tris(hydroxymethyl)phosphinchlorid, Tris(hydroxymethyl)phosphinphosphat oder Tris(hydroxymethyl)phosphinsulfat ist.

4. Verfahren nach einem der vorhergehenden Ansprüche, wobei die Metallsulfidablagerung Eisensulfid ist.

5. Verfahren nach einem der vorhergehenden Ansprüche, wobei das Citratsalz ein Salz von Citronensäure mit einem Kation ist, das vorzugsweise ausgewählt ist aus Natrium und Kalium.

6. Verfahren nach einem der Ansprüche 1 bis 5, wobei das Molverhältnis von Tris(hydroxymethyl)phosphin oder Tetrakis(hydroxyorgano)phosphoniumsalz zu Citratsalz 1:10 bis 1:1 beträgt, z. B. 1:8 bis 1:1.

7. Verfahren nach Anspruch 6, wobei das Molverhältnis von Tris(hydroxymethyl)phosphin oder Tetrakis(hydroxyorgano)phosphoniumsalz zu Citratsalz 1:8 bis 1:1,5 beträgt, z. B. 1:8 bis 1:2, z. B. 1:5 bis 1:2.

8. Verfahren nach einem der Ansprüche 1 bis 5, wobei das Molverhältnis von Tris(hydroxymethyl)phosphin oder Tetrakis(hydroxyorgano)phosphoniumsalz zu Citratsalz 10:1 bis 1:1 beträgt, z. B. 8:1 bis 1:1.

9. Verfahren nach Anspruch 8, wobei das Molverhältnis von Tris(hydroxymethyl)phosphin oder Tetrakis(hydroxyorgano)phosphoniumsalz zu Citratsalz 8:1 bis 1,5:1 beträgt, z. B. 8:1 bis 2:1, z. B. 5:1 bis 2:1.

10. Verfahren nach einem der vorhergehenden Ansprüche, wobei die synergistische Mischung ein Polymer/Copolymer einer ungesättigten Carbonsäure oder ein Copolymer einer ungesättigte Carbonsäure mit einer Sulfonsäure umfasst, wobei das Polymer oder Copolymer entweder endständige Vinylphosphonsäure (VPA) oder Vinyliden-1,1-diphosphonsäure (VDPA) trägt oder solche Monomere in das Polymergrundgerüst eingebaut hat.

11. Verfahren nach Anspruch 10, wobei das Polymer/Copolymer ein Polyacrylat mit endständiger Vinylphosphonsäure (nachfolgend "VPA-endverkapptes Polymer") oder mit endständiger Vinyliden-1,1-diphosphonsäure (nachfolgend "VDPA-endverkapptes Polymer") ist oder ein Polyacrylat sein kann, in das VPA- und/oder VDPA-Monomere eingebaut sind.

12. Verfahren nach Anspruch 10 oder Anspruch 11, wobei das Polymer/Copolymer ein Acrylat/Sulfonat-Copolymer mit endständiger Vinyliden-1,1-diphosphonsäure (nachfolgend "VDPA-endverkapptes Copolymer") oder mit endständiger Vinylphosphonsäure (nachfolgend "VPA-endverkapptes Copolymer" ist oder ein Acrylat/Sulfonat-Copolymer sein kann, in das VPA- und/oder VDPA-Monomere eingebaut sind.

13. Verfahren nach einem der vorhergehenden Ansprüche, wobei die Mischung des Weiteren ein Tensid enthält.

14. Verfahren nach einem der vorhergehenden Ansprüche, wobei die Lösung zusätzlich Biozide, Wasserdispergiermittel, Demulgatoren, Antischaummittel, Lösungsmittel, Ablagerungsinhibitoren, Korrosionsinhibitoren, Sauerstoffabfangittel, Flockungsmittel und/oder Nichttensid-Biopenetrantmaterialien enthalten kann

15. Synergistische Zusammensetzung, umfassend:
(i) ein Tris(hydroxymethyl)phosphin oder Tetrakis(hydroxyorgano)phosphoniumsalz;
(ii) ein Citratsalz und
(iii) gegebenenfalls ein Polymer/Copolymer einer ungesättigten Carbonsäure oder ein Copolymer einer ungesättigten Carbonsäure mit einer Sulfonsäure, wobei das Polymer oder Copolymer entweder endständige Vinylphosphonsäure (VPA) oder Vinyliden-1,1-diphosphonsäure (VDPA) trägt oder solche Monomere in das Polymergrundgerüst eingebaut hat;
wobei der pH-Wert der Zusammensetzung 4 bis 7, vorzugsweise 5 bis 6 ist.

16. Synergistische Zusammensetzung nach Anspruch 15, wobei das Molverhältnis zwischen Komponente (i) und (ii) 1:10 bis 1:1 beträgt, z. B. 1:8 bis 1:1.

17. Synergistische Zusammensetzung nach Anspruch 16, wobei das Molverhältnis zwischen Komponente (i) und (ii) 1:8 bis 1:1,5 beträgt, z. B. 1:8 bis 1:2, z. B. 1:5 bis 1:2.

18. Synergistische Zusammensetzung nach Anspruch 15, wobei das Molverhältnis zwischen Komponente (i) und (ii) von 10:1 bis 1:1 beträgt, z. B. von 8:1 bis 1:1.

19. Synergistische Zusammensetzung nach Anspruch 18, wobei das Molverhältnis zwischen Komponente (i) und (ii) von 8:1 bis 1,5:1 beträgt, z. B. 8:1 bis 2:1, z. B. 5:1 bis 2:1.

## Revendications

1. Procédé de traitement d'un système d'eau contenant un tartre de sulfure métallique ou en contact avec celui-ci, le procédé comprenant :
- l'ajout audit système, séparément ou conjointement, d'un mélange synergique de (i) un composé phosphoré choisi parmi la tris(hydroxyméthyl)phosphine et les sels de tétrakis(hydroxyorgano)phosphonium et (ii) un sel de type citrate, pour fournir une solution ; puis
- la mise en contact de ladite solution avec ledit tartre,
ce qui dissout de cette manière au moins une partie dudit tartre dans ladite solution ; et
- le retrait dudit sulfure métallique dissous du système.

2. Procédé selon la revendication 1, dans lequel le mélange synergique est en contact avec le tartre de sulfure métallique à un pH compris entre 4 et 7, le plus préférablement de 4,5 à 7, par exemple de 5 à 6.

3. Procédé selon la revendication 1 ou la revendication 2, dans lequel le sel de tétrakis(hydroxyorgano)phosphonium est le chlorure de tris(hydroxyméthyl)phosphine, le phosphate de tris(hydroxyméthyl)phosphine ou le sulfate de tris(hydroxyméthyl)phosphine.

4. Procédé selon l'une quelconque des revendications précédentes, dans lequel le tartre de sulfure métallique est du sulfure de fer.

5. Procédé selon l'une quelconque des revendications précédentes, dans lequel le sel de type citrate est un sel de l'acide citrique avec un cation de préférence choisi entre le sodium et le potassium.

6. Procédé selon l'une quelconque des revendications 1 à 5, dans lequel le rapport molaire de la tris(hydroxyméthyl)phosphine ou du sel de tétrakis(hydroxyorgano)phosphonium au sel de type citrate est de 1:10 à 1:1, par exemple de 1:8 à 1:1.

7. Procédé selon la revendications 6, dans lequel le rapport molaire de la tris(hydroxyméthyl)phosphine ou du sel de tétrakis(hydroxyorgano)phosphonium au sel de type citrate est de 1:8 à 1:1,5, par exemple de 1:8 à 1:2, par exemple de 1:5 à 1:2.

8. Procédé selon l'une quelconque des revendications 1 à 5, dans lequel le rapport molaire de la tris(hydroxyméthyl)phosphine ou du sel de tétrakis(hydroxyorgano)phosphonium au sel de type citrate est de 10:1 à 1:1, par exemple de 8:1 à 1:1.

9. Procédé selon la revendications 8, dans lequel le rapport molaire de la tris(hydroxyméthyl)phosphine ou du sel de tétrakis(hydroxyorgano)phosphonium au sel de type citrate est de 8:1 à 1,5:1, par exemple de 8:1 à 2:1, par exemple de 5:1 à 2:1.

10. Procédé selon l'une quelconque des revendications précédentes, dans lequel le mélange synergique comprend un polymère/copolymère d'un acide carboxylique insaturé ou un copolymère d'un acide carboxylique insaturé avec un acide sulfonique, ledit polymère ou copolymère étant à terminaison acide vinylphosphonique (VPA) ou acide vinylidène-1,1-diphosphonique (VDPA), ou ayant de tels monomères incorporés dans la chaîne principale du polymère.

11. Procédé selon la revendication 10, dans lequel le polymère/copolymère est un polyacrylate à terminaison acide vinylphosphonique (ci-après « polymère coiffé en extrémité par VPA ») ou à terminaison acide vinylidène-1,1-diphosphonique (ci-après « polymère coiffé en extrémité par VDPA »), ou peut être un polyacrylate incorporant des monomères VPA et/ou VDPA.

12. Procédé selon la revendication 10 ou la revendication 11, dans lequel le polymère/copolymère est un copolymère d'acrylate/sulfonate à terminaison acide vinylidène-1,1-diphosphonique (ci-après «copolymère coiffé en extrémité par VDPA ») ou à terminaison acide vinylphosphonique (ci-après « copolymère coiffé en extrémité par VPA ») ou peut être un copolymère d'acrylate/sulfonate incorporant des monomères VPA et/ou VDPA.

13. Procédé selon l'une quelconque des revendications précédentes, dans lequel le mélange contient en outre un tensioactif.

14. Procédé tel que revendiqué dans l'une quelconque des revendications précédentes, dans lequel la solution peut contenir en outre des biocides, des dispersants dans l'eau, des désémulsifiants, des antimousses, des solvants, des inhibiteurs de tartre, des inhibiteurs de corrosion, des piégeurs d'oxygène, des floculants et/ou des biopénétrants non-tensioactifs.

15. Composition synergique, comprenant :
(i) une tris(hydroxyméthyl)phosphine ou un sel de tétrakis(hydroxyorgano)phosphonium ;
(ii) un sel de type citrate ; et
(iii) optionnellement, un polymère/copolymère d'un acide carboxylique insaturé ou un copolymère d'un acide carboxylique insaturé avec un acide sulfonique, ledit polymère ou copolymère étant à terminaison acide vinylphosphonique (VPA) ou acide vinylidène-1,1-diphosphonique (VDPA), ou ayant de tels monomères incorporés dans la chaîne principale du polymère ;
le pH de la composition étant de 4-7, de préférence de 5-6.

16. Composition synergique selon la revendication 15, dans laquelle le rapport molaire entre les composants (i) et (ii) est de 1:10 à 1:1, par exemple de 1:8 à 1:1.

17. Composition synergique selon la revendication 16, dans laquelle le rapport molaire entre les composants (i) et (ii) est de 1:8 à 1:1,5, par exemple de 1:8 à 1:2, par exemple de 1:5 à 1:2.

18. Composition synergique selon la revendication 15, dans laquelle le rapport molaire entre les composants (i) et (ii) est de 10:1 à 1:1, par exemple de 8:1 à 1:1.

19. Composition synergique selon la revendication 18, dans laquelle le rapport molaire entre les composants (i) et (ii) est de 8:1 à 1,5:1, par exemple de 8:1 à 2:1, par exemple de 5:1 à 2:1.
